# EUROPÄISCHE PATENTSCHRIFT

(11) **EP 1 308 017 B1**
(45) Veröffentlichungstag und Bekanntmachung des Hinweises auf die Patenterteilung: **02.08.2006**
(21) Anmeldenummer: 01969337.3
(22) Anmeldetag: 05.07.2001
(51) Int. Cl.: H04L 29/06, H04L 12/18, H04L 9/08

(54) **VERFAHREN ZUR SCHLÜSSELVEREINBARUNG FÜR EINE KRYPTOGRAPHISCH GESICHERTE PUNKT-ZU-MULTIPUNKT VERBINDUNG**
METHOD OF KEY EXCHANGE FOR A CRYPTOGRAPHIC SECURE POINT TO MULTIPOINT CONNECTION
PROCEDE D'ECHANGE DE CLE DESTINE A UNE LIAISON POINT A MULTIPOINT SECURISEE PAR CRYPTOGRAPHIE

(30) Priorität: 01.08.2000 DE 10037500
(43) Veröffentlichungstag der Anmeldung: 07.05.2003
(73) Patentinhaber: Deutsche Telekom AG, 53113 Bonn (DE)
(72) Erfinder: MARTIN, Tobias, 35466 Rabenau (DE); SCHWENK, Jörg, 91239 Henfenfeld (DE)
(86) Internationale Anmeldenummer: PCT/EP2001/007673
(87) Internationale Veröffentlichungsnummer: WO 2002/011356

(56) Entgegenhaltungen:
- EP-A- 0 887 982
- APOSTOLOPOULOS G ET AL: "Transport layer security: how much does it really cost?" INFOCOM '99. EIGHTEENTH ANNUAL JOINT CONFERENCE OF THE IEEE COMPUTER AND COMMUNICATIONS SOCIETIES. PROCEEDINGS. IEEE NEW YORK, NY, USA 21-25 MARCH 1999, PISCATAWAY, NJ, USA,IEEE, US, 21. März 1999 (1999-03-21), Seiten 717-725, XP010323786 ISBN: 0-7803-5417-6
- TOGA J ET AL: "ITU-T standardization activities for interactive multimedia communications on packet-based networks: H.323 and related recommendations" COMPUTER NETWORKS, ELSEVIER SCIENCE PUBLISHERS B.V., AMSTERDAM, NL, Bd. 31, Nr. 3, 11. Februar 1999 (1999-02-11), Seiten 205-223, XP004304599 ISSN: 1389-1286
- FAN DU ET AL: "Towards solving multicast key management problem" COMPUTER COMMUNICATIONS AND NETWORKS, 1999. PROCEEDINGS. EIGHT INTERNATIONAL CONFERENCE ON BOSTON, MA, USA 11-13 OCT. 1999, PISCATAWAY, NJ, USA,IEEE, US, 11. Oktober 1999 (1999-10-11), Seiten 232-236, XP010359533 ISBN: 0-7803-5794-9

## Beschreibung

Die Erfindung betrifft ein Verfahren zur Schlüsselvereinbarung für eine kryptographisch gesicherte Punkt-zu-Multipunktverbindung. Sie schlägt eine Lösung vor, bei welcher von Punkt-zu-Punktverbindungen bekannte Prinzipien der Schlüsselvereinbarung für eine gesicherte Datenübertragung zwischen einem Client und einem Server in geeigneter Weise für den Aufbau einer Multicast-Verbindung modifiziert werden.

Mit der zunehmenden Nutzung des Internets steigt auch die Gefahr eines Missbrauchs und/oder einer Manipulation der Vielzahl der über das Netz ausgetauschten, teilweise sensiblen Daten. Die Mehrheit der Nutzer des Internets und selbstverständlich erst recht die Fachleute sind der Tatsache bewusst, dass das Internet insoweit als eine unsichere Umgebung anzusehen ist. Um aber dennoch die Nutzungsmöglichkeiten des Internets zu erhöhen, steigt aus den vorgenannten Gründen der Bedarf an Lösungen für eine vertrauliche Datenübertragung. Es werden Lösungen benötigt, welche die Vertraulichkeit, die Integrität und die Authentizität von Daten gewährleisten. Aufgrund der technischen Beschaffenheit des Internets als ein für jedermann offenes Netz, kommt eine Sicherung der Daten in der Form einer physikalischen Zugangssperre für schützenswerte Daten nicht in Betracht. Die Lösung des Problems besteht daher darin die über das Netz geleiteten Daten, zumindest soweit es sich um sensible Daten handelt oder aber sogar generell, zu verschlüsseln und im Zuge dieser Verschlüsselung durch geeignete Verarbeitung der Daten Merkmale zum Nachweis ihrer jeweiligen Authentizität zu gewinnen.

Zur Absicherung von Client-Server-Verbindung sind hierzu bereits unterschiedliche Ansätze bekannt geworden. Ein inzwischen relativ weit verbreitetes Verfahren zur Schlüsselvereinbarung bei Verbindungen, die einen gesicherten Datenaustausch zulassen, ist das so genannte Secure Sockets Layer-Protokoll (SSL), welches in seiner standardisierten Variante auch als Transport Layer Security (TLS) bekannt ist. Dieses Protokoll regelt die Modalitäten für eine Verbindung zwischen einem Client und einem Server bei der die Daten in verschlüsselter Form übertragen werden. Mit Hilfe des Protokolls verständigen sich der Client und der Server über das zu verwendende Verschlüsselungsverfahren, die während des Bestehens der Verbindung zur Verschlüsselung eingesetzten Sitzungsschlüssel, über Authentizitätsmerkmale sowie gegebenenfalls über weitere Verbindungsmodalitäten, wie beispielsweise Verfahren zur Verringerung des Datenvolumens durch Datenkompression. Der Vorteil des Verfahrens ist dabei darin zu sehen, dass sich das SSL-Protokoll nahtlos in das OSI-Schichtenmodell für den Datentransfer einfügt. Insoweit stellt das Protokoll einen in beiden Richtungen transparenten Übergang (Socket) vorzugsweise zwischen der Anwendungs- und Transportschicht entsprechend dem Schichtenmodell dar. Das SSL-Protokoll wird beispielsweise näher erläutert durch Stephen Thomas in "SSL & TLS Essential", John Wiley & Sons, New York 2000. Auf das Protokoll wird später im Zusammenhang mit der Erläuterung der Erfindung noch näher einzugehen sein.

Wie dargestellt, wurde SSL/TLS zur Absicherung von Punkt-zu-Punkt-Verbindungen konzipiert. Dies wird unter anderem auch daran deutlich, dass zwei der drei Werte (PremasterSecret, ClientRandom), aus denen letztlich der kryptographische Schlüssel abgeleitet wird, vom Client generiert werden. Es ist daher nicht möglich, dass der Server in der Kommunikation mit verschiedenen Clients jeweils den gleichen Schlüssel verwendet. Diese Tatsache macht den Einsatz des SSL-Handshakes, wie er vom standardisierten SSL-Protokoll bekannt ist, in Punkt-zu-Multipunktverbindungen mit dem Server als Datenquelle und mehreren Clients als Datensenken unmöglich. Derartige IP Multicast-Verbindungen ermöglichen bei einer Vielzahl von Anwendungsfällen eine effektive Ausnutzung der im Netz zur Verfügung stehenden Bandbreite und ingesamt einen sparsamen Umgang mit Zeit- und Hardwareressourcen. Sie werden beispielsweise beim Streaming von Audio-Videodaten eingesetzt. Selbstverständlich besteht aber auch hier der Bedarf an gegen Missbrauch und Manipulation gesicherten Verbindungen. In diesem Zusammenhang sind aber bisher nur proprietäre Lösungen, wie beispielsweise im Zusammenhang mit dem DVB (Digital Video Video Broadcast) bekannte geworden, welche aber nicht ohne weiteres für andere Zwecke einsetzbar sind.

Ein Verfahren und System zur sicheren Verteilung von Geheimübertragungs-schlüsseln in Mehrfachsende-Netzwerken ist in der EP-A-0 887 982 offenbart.

Der Erfindung liegt daher die Aufgabe zugrunde, ein universelles Verfahren zur Schlüsselvereinbarung für eine kryptographisch gesicherte Punkt-zu-Mulitpunktverbindung anzugeben. Zudem soll das Verfahren so wenig wie möglich verändernd in bereits bestehende Übertragungskonzepte und Sicherheitsarchitekturen eingreifen, sich aber insbesondere problemlos in das OSI-Schichtenmodell einfügen.

Die Aufgabe wird durch ein Verfahren mit den Merkmalen des Hauptanspruchs gelöst. Vorteilhafte Ausgestaltungen bzw. Weiterbildungen des erfindungsgemäßen Verfahrens sind durch die Unteransprüche gegeben.

Gemäß der Erfindung erfolgt die Schlüsselvereinbarung während des Aufbaus der Verbindung zunächst in Anlehnung an das SSL- bzw. TLS-Protokoll, wobei jedoch in Abhängigkeit eines in einer Server-Nachricht enthaltenen Kennzeichens, welches die aufzubauende Verbindung als IP Multicast-Verbindung kennzeichnet, die Reihenfolge der Nachrichten des die SSL-Sitzung einleitenden Handshakes verändert wird. Gleichzeitig wird der zur Erzeugung des oder der Sitzungsschlüssel für die Verschlüsselung der Anwendungsdaten dienende MasterKey vom Server generiert. Der vom Server generierte MasterKey wird dann gegebenenfalls mit dem öffentlichen Schlüssel des Clients verschlüsselt an den Client übertragen. Ob eine Verschlüsselung des MasterKey mit dem öffentlichen Schlüssel des Clients erfolgt hängt dabei von der konkret gewählten Verfahrensvariante ab, wobei die Verfahrensvarianten, welche Gegenstand von Ausgestaltungen des erfindungsgemäßen Verfahrens sind, nachfolgend noch erläutert werden. Die Übertragung des MasterKey an den Client erfolgt mittels einer im weiteren als ServerMasterKeyExchange-Nachricht bezeichneten Nachricht. Diese Nachricht unterscheidet sich von der in manchen Darstellungen des Standard-SSL verwendeten ServerKeyExchange-Nachricht. Mit der letztgenannten Nachricht gibt der Server dem Client beim Standard-SSL seinen öffentlichen Schlüssel (unverschlüsselt) bekannt. Dieser öffentliche Schlüssel wird dann später vom Client zur Verschlüsselung des von ihm generierten und an den Server übertragenen MasterKey verwendet. Im Gegensatz dazu handelt es sich bei dem gemäß der Erfindung mit der ServerMasterKeyExchange-Nachricht übertragenen Schlüssel um den MasterKey zur Ableitung der weiteren Sitzungsschlüssel, welcher also abweichend vom Standard-SSL vom Server und nicht vom Client erzeugt und zur Verwendung in der jeweiligen Sitzung zur Verfügung gestellt wird. Daher wird diese Nachricht zur Vermeidung von Missverständnissen im weiteren als ServerMasterKeyExchange-Nachricht bezeichnet.

Entsprechend einer möglichen Ausgestaltung des erfindungsgemäßen Verfahrens ist das zur Kennzeichnung der Verbindung als IP Multicast-Verbindung dienende Kennzeichen (IP Multicast-Kennzeichen) Bestandteil des vom Server mit der CertificateRequest-Nachricht angeforderten ClientCerficateType.

Eine andere Variante des Verfahrens sieht die Aufnahme einer anderen neuen, für die praktische Umsetzung der Erfindung noch zu definierenden Nachricht des Servers in das Handshake-Protokoll vor. Hierbei handelt es sich quasi um eine modifizierte ServerMasterKeyExchange-Nachricht, mit welcher der Server den von ihm generierten MasterKey und, je nach weiterer Ausgestaltung dieser Variante, ein die Verbindung als IP Multicast-Verbindung charakterisierendes Kennzeichen an den Client übermittelt. Prinzipiell besteht also die Möglichkeit, dass das IP Muldcast-Kennzeichen bereits mit der CertificateRequest-Nachricht des Servers übertragen wird oder aber erst später als Bestandteil der schon genannten modifizierten ServerMasterKeyExchange-Nachricht. Da sich allerdings im letzgenannten Fall Probleme hinsichtlich der Abwärtskompatibilität zum Standard-SSL ergeben (der Client geht bis zum Empfang der modifizierten ServerMasterKeyExchange-Nachricht von einem Ablauf nach dem Standard-SSL-Handshake aus und kann so unter Umständen mit der für ihn fremden modifizierten ServerMasterKeyExchange-Nachricht nichts anfangen), wäre der ersten Variante der Vorzug zu geben.

Bei der Einfügung des IP Multicast-Kennzeichens in die CertificateRequest-Nachricht gestaltet sich ein mögliches Verfahrensregime wie folgt. Nachdem der Client die mit dem IP Multicast-Kennzeichen versehene CertificateRequest-Nachricht vom Server empfangen hat, wird der Ablauf des die SSL-Sitzung einleitenden Handshakes zunächst in der Weise verändert, dass die Generierung des MasterKey durch den Client unterbleibt. Der Client setzt sein Certificate ab, ohne, wie sonst dem SSL-Handshake entsprechend, unmittelbar daran anschließend eine ChangeCipherSpec-Nachricht sowie eine Finished-Nachricht auszusenden und auf verschlüsselte Übertragung umzuschalten. Nach dem Empfang des Certificate des Clients gibt der Server eine ServerMasterKeyExchange-Nachricht aus. Diese Nachricht beinhaltet den MasterKey bzw. das MasterSecret, aus dem im weiteren Ablauf die Sitzungsschlüssel abgeleitet werden. Unmittelbar nach Ausgabe der ServerMasterKeyExchange-Nachricht sendet der Server ChangeCipherSpec und daran anschließend Finished. Der Client bestätigt den Empfang der ServerMasterKeyExchange-Nachricht, indem er seinerseits ChangeCipherSpec und Finished ausgibt sowie in den Modus für verschlüsselte Übertragung umschaltet. Hieran anschließend kann die eigentliche unter Verschlüsselung der Daten ablaufende Sitzung beginnen. Genauso wie beim Standard-SSL-Protokoll erfolgt bei dieser Verfahrensvariante der Schlüsselaustausch, nämlich die Übermittlung des Masterkey über den zunächst noch ungesicherten Kanal. Dies ist aber insoweit unproblematisch als der Masterkey bei dieser Verfahrensvariante mit dem öffentlichen Schlüssel des Client verschlüsselt ist.

Gemäß einer anderen Variante des mit der Erfindung vorgeschlagenen Verfahrens erfolgt der Austausch des MasterKey der zur Ableitung der Schlüssel für die eigentliche Sitzung dient,- über einen bereits SSL-/TLS-gesicherten Kanal. Der Verfahrensablauf gestaltet sich folglich etwas anders. Zunächst läuft der Handshake bis zur ChangeCipherSpec-Nachricht des Servers entsprechend dem Standard SSL-Protokoll ab. Erst hiernach wird der weitere Ablauf modifiziert. Unmittelbar der ChangeCipherSpec-Nachricht folgend gibt dabei der Server eine neue, bei einer etwaigen Aufnahme in den Standard in der Praxis noch exakt zu definierende Nachricht aus. Es handelt sich hierbei quasi um eine modifizierte ServerMasterKeyExchange-Nachricht. Bestandteile dieser Nachricht sind in jedem Falle ein neuer vom Server generierter MasterKey und gegebenenfalls ein die Umschaltung des Ablaufs bewirkendes IP Multicast-Kennzeichen. Da der Client und der Server aufgrund von ihnen bereits ausgegebener ChangeCipherSpec-Nachrichten bereits im verschlüsselten Modus arbeiten, kann bei dieser Verfahrenskonstellation der MasterKey ohne weitere Verschlüsselung mit dem öffentlichen Schlüssel des Clients übertragen werden. Der Client antwortet hierauf mit einer erneuten ChangeCipherSpec-Nachricht sowie der erneuten Ausgabe der Finished-Nachricht. Daran schliesst sich dann die nochmalige Ausgabe von ChangeCipherSpec und Finished durch den Server an. Client und Server schalten in diesem Fall mit der Ausgabe der Finished-Nachricht in einen Modus zur Verschlüsselung der Daten unter Verwendung des neuen MasterKey um.

Die Erfindung ist besonders vorteilhaft ausgestaltet, wenn der Server jeweils in der Kommunikation mit einem Client die gleiche CipherSuite verwendet, die er zuvor in der Kommunikation mit anderen Clients dem Handshake zugrunde gelegt hat. Wenn diese CipherSuite in der ClientHello-Nachricht nicht enthalten ist, wird zweckmäßigerweise eine Fehlermeldung durch den Server ausgegeben. Die zuletzt dargestellte Variante, welche bis zur erstmaligen Ausgabe der ChangeCipherSpec-Nachricht durch den Server nach dem Standard-SSL-Protokoll abläuft, ist besonders vorteilhaft ausgestaltet, wenn der Server beim zweiten ChangeCipherSpec die gleiche, auch als gemeinsame CipherSuite in der Kommunikation mit den anderen Clients dienende CipherSuite beibehält.

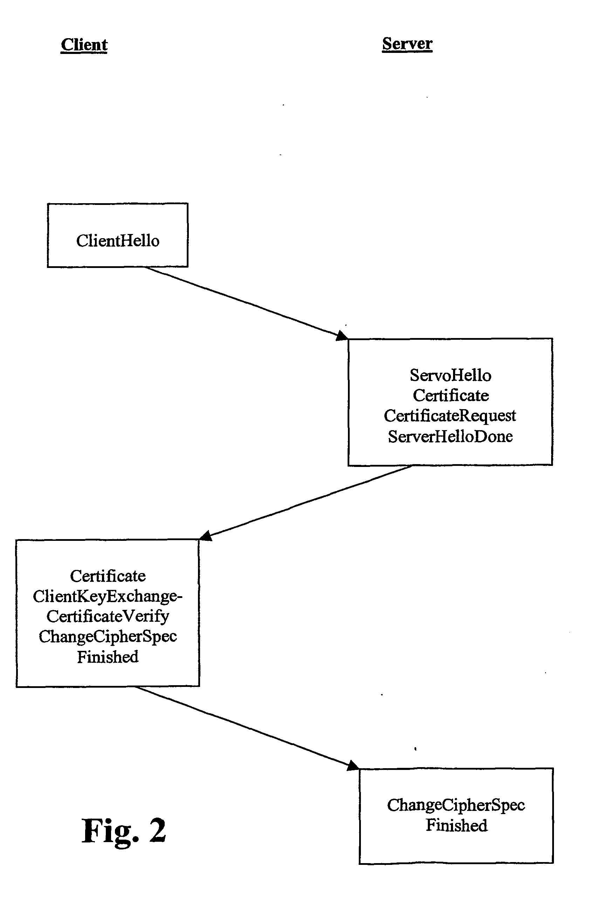

Die Erfindung soll nachfolgend an Hand von Ausführungsbeispielen näher erläutert werden. Zum besseren Verständnis soll dazu zunächst der SSL-Handshake nach dem Standard-SSL-Protokoll kurz erläutert werden. Der Handshake gestaltet sich nach dem folgenden Ablauf, welcher in der Fig. 2 auch nochmals in einer Blockdarstellung gezeigt ist:

| **Client** | | **Server** |
|---|---|---|
| ClientHello-Nachricht mit den vorgeschlagenen SSL-Optionen | → | |
| | ← | ServerHello-Nachricht mit den ausgewählten SSL-Optionen |
| | ← | Certificate-Nachricht mit Serverzertifikat |
| | ← | CertificateRequest-Nachricht, der Client wird aufgefordert, sich zu authentifizieren |
| | ← | ServerHelloDone-Nachricht |
| Certificate-Nachricht mit Clientzertifikat | → | |
| ClientKeyExchange-Nachricht mit Sitzungsschlüssel (verschlüsselt mit Public-Key des Servers) | → | |
| CertificateVerify-Nachricht mit Signatur aller vorangegangenen Handshake-Nachrichten | → | |
| ChangeCipherSpec | → | |
| Finished | → | |
| | ← | ChangeCipherSpec |
| | ← | Finished |

Die SSL-Sitzung beginnt mit dem ClientHello des Client. Hierauf antwortet der Server mit einer ServerHello-Nachricht und gibt anschließend dem Client sein Certificate bekannt. Bestandteil des mit der ServerHello-Nachricht eingeleiteten ServerHello-Blocks ist außerdem eine CertificateRequest-Nachricht. Hiermit fordert der Server den Client auf, sich zu authentifizieren. Der ServerHello-Block wird durch die ServerHelloDone-Nachricht abgeschlossen. Der Client authentifiziert sich beim Server mittels einer Certificate-Nachricht und einer nachfolgend noch zu erläuternden CertificateVerify-Nachricht. Nach der Certificate-Nachricht wird jedoch vom Client zunächst eine ClientKeyExchange-Nachricht ausgegeben. Mit dieser Nachricht teilt der Client dem Server den mit dem PublikKey des Servers verschlüsselten MasterKey mit, welcher im weiteren Verlauf der Ableitung der Sitzungsschlüssel entsprechend dem zwischen Client und Server vereinbarten Verschlüsselungsverfahren dient. An die ClientKeyExchange-Nachricht des Clients schließt sich dann die CerbificateVerify-Nachricht an, mit welcher der Client die vorangegangenen Handshake-Nachrichten signiert. Zur Beendigung des Handshake wird durch den Client ChangeCipherSpec sowie Finished ausgegeben und daran anschließend unmittelbar in den Modus zur verschlüsselten Übertragung umgeschaltet. Der Server quittiert dies seinerseits mit ChangeCipherSpec und Finished und schaltet ebenfalls in den Modus zur Übertragung verschlüsselter Daten um.

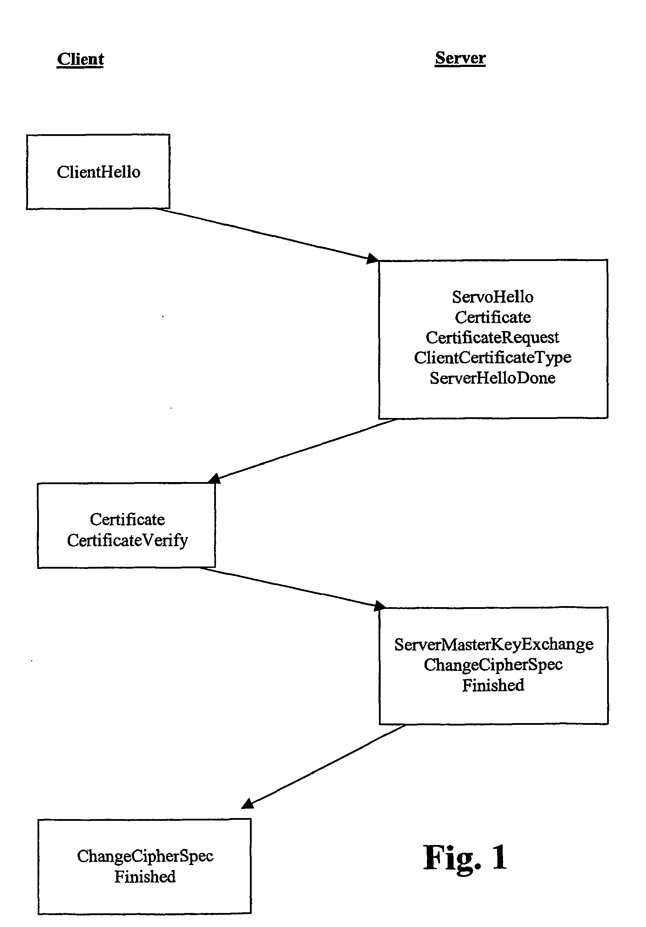

Wie aus dem dargestellten Ablauf zu ersehen ist, wird der MasterKey zur Ableitung der weiteren Sitzungsschlüssel durch den Client generiert. Zwei der drei Werte, nämlich das PremasterSecret und das ClientRandom werden dabei vom Client zur Verfügung gestellt. Selbstverständlich kann der vom Client gelieferte MasterKey daher nicht für die Kommunikation mit anderen Clients verwendet werden. Hier setzt die Erfindung an. Sie geht von der Überlegung aus, einer der vom Server ausgegebenen Nachrichten ein IP Multicast-Kennzeichen hinzu zu fügen und hierdurch den Ablauf des Handshake-Protokolls zu modifizieren sowie zu veranlassen, dass der MasterKey in Folge dieses modifizierten Ablaufs nicht durch den Client, sondern durch den Server generiert wird. Hierfür könnte sich der Handshake gemäß einer ersten Variante des erfindungsgemäßen Verfahrens, welche durch die Fig. 1 nochmals in einer Blockdarstellung veranschaulicht ist, wie nachfolgend angegeben gestalten.

| **Client** | | **Server** |
|---|---|---|
| ClientHello | → | |
| | ← | ServerHello |
| | ← | Certificate |
| | ← | CertificateRequest ClientCertificateType: Multicast (z.B. 30) |
| | ← | ServerHelloDone |
| Certificate | → | |
| CertificateVerify | → | |
| | ← | ServerMasterKeyExchange |
| | ← | ChangeCipherSpec |
| | ← | Finished |
| ChangeCipherSpec | → | |
| Finished | → | |

Zunächst wird zum Beginn der Sitzung wie beim Standard-SSL-Protokoll durch den Client eine ClientHello-Nachricht an den Server übermittelt. Der Server antwortet ebenfalls, noch dem standardisierten Ablauf folgend, mit einer ServerHello-Nachricht. Der ServerHello-Nachricht folgt eine Certificate-Nachricht. Die darauf folgend ausgegebene CerüficateRequest-Nachricht beinhaltet in der Form des ClientCertificateType ein die aufzubauende Verbindung als IP Multicast-Verbindung charakterisierendes Kennzeichen, in dem Beispiel durch die Zahl 30 gekennzeichnet. Durch dieses IP Multicast-Kennzeichen wird dem Client signalisiert, dass der SSL-Handshake im weiteren in einer etwas modifizierten Form, insbesondere mit Veränderung der Reihenfolge der Nachrichten abläuft. Der mit der ServerHello-Nachricht eingeleitete und das Certificate sowie das CertificateRequest mit dem IP Multicast-Kennzeichen enthaltende ServerHello-Block wird durch die ServerHelloDone-Nachricht abgeschlossen. Der Client gibt entsprechend der Aufforderung durch die CertificateRequest-Nachricht sein Certificate bekannt. Dieses Certificate muss ein Kennzeichen enthalten, welches den Client dafür authentisiert, in einer IP Multicast-Verbindung Daten mit dem Server auszutauschen. Anders als beim Handshake Protokoll nach dem Standard-SSL wird jedoch durch den Client nach der Ausgabe der Certificate-Nachricht keine ClientKeyExchange-Nachricht abgesetzt. Es werden lediglich die zuvor ausgesendeten Nachrichten durch das CertificateVerify signiert. Auch die Ausgabe einer ChangeCipherSpec-Nachricht sowie des Finished unterbleibt zunächst. Vielmehr werden nun zunächst durch den Server eine Reihe von Nachrichten ausgegeben. Zunächst setzt der Server eine ServerMasterKeyExchange-Nachricht ab. Diese Nachricht beinhaltet den von ihm generierten und mit dem öffentlichen Schlüssel des Clients verschlüsselten MasterKey. Die Grundlage zur Ableitung der für die Verschlüsselung der Nutzdaten benötigten Sitzungsschlüssel bildet also abweichend vom Standard SSL der vom Server erzeugte MasterKey. Nach der Ausgabe der ServerMasterKeyExchange-Nachricht setzt der Server noch ChangeCipherSpec sowie Finished ab und schaltet danach in den Modus für eine verschlüsselte Übertragung um. Erst hiernach gibt der Client seinerseits ChangeCipherSpec sowie Finished aus und schaltet ebenfalls in den Modus zur Verschlüsselung der Daten um. Abweichend von dem Handshake nach dem Standard-SSL-Protokoll wird also die Einleitung der eigentlichen, verschlüsselt stattfindenden Sitzung nicht durch das Finished des Servers sondern durch das Finished des Clients abgeschlossen.

Eine andere Verfahrensvariante ist dadurch gegeben, dass der zur Erzeugung der Sitzungsschlüssel für dieVerschlüsselung der eigentlichen Nutzdaten dienende MasterKey bereits über einen SSL-gesicherten Kanal übertragen wird. Ein möglicher Ablauf des Handshake gestaltet sich dann wie folgt.

| **Client** | | **Server** |
|---|---|---|
| ClientHello | → | |
| | ← | ServerHello |
| | ← | Certificate |
| | ← | CertificateRequest |
| | ← | ServerHelloDone |
| Certificate | → | |
| ClientKeyExchange-Nachricht | → | |
| CertificateVerify | → | |
| ChangeCipherSpec | → | |
| Finished | → | |
| | ← | ChangeCipherSpec |
| | ← | modifizierter ServerMasterKeyExchange IP-Multicast-Adresse bzw. Kennzeichen IP-Multicast-Schlüssel |
| | ← | ChangeCipherSpec |
| | ← | Finished |
| ChangeCipherSpec | → | |
| Finished | → | |

Der Handshake verläuft bis zur Ausgabe der ersten ChangeCipherSpec-Nachricht durch den Server entsprechend dem Standard-SSL-Protokoll. Der Server reagiert hierauf mit einer ChangeCipherSpec-Nachricht, die aber abweichend vom üblichen Ablauf nicht durch die Finished-Nachricht gefolgt wird. Statt dessen gibt der Server nun eine für die praktische Umsetzung der Erfindung noch näher zu definierende Nachricht aus. Diese enthält zumindest einen vom Server generierten MasterKey und soll daher hier im weiteren als modifizierte ServerMasterKeyExchange-Nachricht bezeichnet werden. Die genaue Ausgestaltung dieser Nachricht hängt davon ab, zu welchem Zeitpunkt gemäß dieser zweiten Variante das IP Multicast-Kennzeichen vom Server an den Client übermittelt wird. Das IP Multicast-Kennzeichen kann dabei wie bei der Variante 1 Bestandteil der CertificateRequest-Nachricht des Servers sein oder aber entsprechend dem vorstehend dargestellten Ablauf einen Teil der modifizierten ServerMasterKeyExchange-Nachricht bilden. Ein anderer, nochmals geringfügig modifizierter Ablauf gestaltet sich entsprechend dem folgenden Schema.

| **Client** | | **Server** |
|---|---|---|
| ClientHello | → | |
| | ← | ServerHello |
| | ← | Certificate |
| | ← | ServerHelloDone |
| Certificate | → | |
| ClientKeyExchange | → | |
| ChangeCipherSpec | → | |
| Finished | → | |
| | ← | ChangeCipherSpec |
| | ← | ClientAuthRequest |
| ClientAuthResponse (z.B. Passwort o. PIN) | → | |
| | ← | modifizierter |
| | | ServerMasterKeyExchange |
| | | IP-Multicast-Adresse |
| | | IP-Multicast-Schlüssel |
| | ← | ChangeCipherSpec |
| | ← | Finished |
| ChangeCipherSpec | → | |
| Finished | → | |

Hier geht der modifizierten ServerMasterKeyExchange-Nachricht ein ClientAuthRequest des Servers voraus. Mit diesem ClientAuthRequest ergeht die Aufforderung, die Authentisierung durch Eingabe beispielsweise eines Passworts oder einer PIN am Client vorzunehmen. Das Passwort bzw. die PIN werden vom Client mit der ClientAuthResponse-Nachricht an den Server übermittelt. Der weitere Ablauf gestaltet sich entsprechend der zuvor dargestellten Verfahrensvariante.

Beim Einsatz eines der zuvor beschriebenen modifizierten SSL-Protokolle zur Etablierung einer Security Association im Sinne eines IPSec-Standards ist noch zu beachten, dass die einzelnen Nachrichten bzw. Nachrichtenblöcke als ISAKMP-Nachrichten übertragen werden (IETF RFC 2408) und dass die ServerMasterKeyExchange-Nachricht in allen Varianten neben dem (Pre-)MasterSecret auch alle anderen Informationen enthält, um es dem Client zu erlauben, eine Security Association für IP Multicast zu generieren (vgl. IETF RFC 2401). Dazu zählen unter anderem die IP Multicast-Adresse und der Security Parameters Index (SPI), der hier vom Server gesetzt werden muss. Security Associations sind bidirektional bzw. in beide Richtungen (Senden und Empfangen) gleich.

Das SSL/TLS-Protokoll wird heute auf OSI-Layer 2 oder 5 eingesetzt. Da das IP Protokoll und damit je nach Option das IP Multicast auf Layer 3 eingesetzt wird, kann die Erfindung genauso wie das Standard SSL-Protokoll zwischen der Anwendungsschicht (Telnet, FTP oder HTTP) und der Transportschicht TCP eingesetzt werden.

Zur praktischen Realisierung des Verfahrens beantragt der Kunde ein spezielles SSL-Client-Zertifikat. In diesem Zertifikat ist eine Extension gesetzt, die anzeigt, dass dieses Zertifikat zur Entschlüsselung von Daten eingesetzt werden kann und vom Typ Multicast-SSL ist. Mit dem Senden der jeweiligen Nachrichten können zwar zwischen Client und Server auch, wie üblich, Random-Werte (ClientRandom, ServerRandom) ausgetauscht werden, jedoch gehen dieses nicht in die Berechnung des MasterKey bzw. des MasterSecret ein. Der MasterKey wird vom Server ausschließlich aus dem generierten PremasterSecret abgeleitet.

## Patentansprüche

1. Verfahren zur Schlüsselvereinbarung für eine kryptographisch gesicherte Punkt-zu-Multipunktverbindung zwischen einem Server als Datenquelle und mehreren Clients als Datensenken im Internet **dadurch gekennzeichnet, dass** die Schlüsselvereinbarung nach einem modifizierten SSL- bzw. TLS-Protokoll erfolgt, wobei in Abhängigkeit eines in einer Server-Nachricht enthaltenen Kennzeichens, welches die aufzubauende Verbindung als IP Multicast-Verbindung kennzeichnet, die Reihenfolge der Nachrichten des die SSL-Sitzung einleitenden Handshakes verändert und der zur Erzeugung des oder der Sitzungsschlüssel zur Verschlüsselung der Anwendungsdaten dienende MasterKey vom Server generiert und verschlüsselt an den Client übertragen wird.

2. Verfahren nach Anspruch 1, **dadurch gekennzeichnet, dass** der MasterKey mit dem öffentlichen Schlüssel des Clients verschlüsselt wird.

3. Verfahren nach Anspruch 1 oder 2, **dadurch gekennzeichnet, dass** das zur Kennzeichnung der Verbindung als IP Multicast-Verbindung dienende IP Multicast-Kennzeichen/ Bestandteil des vom Server mit der CertificateRequest-Nachricht angeforderten ClientCertificateType ist.

4. Verfahren nach Anspruch 1 oder 2, **dadurch gekennzeichnet, dass** das IP Multicast-Kennzeichen Bestandteil einer modifizierten ServerMasterKeyExchange-Nachricht ist, mit welcher der Server gleichzeitig den MasterKey für die spätere Ableitung von Sitzungsschlüsseln an den Client übermittelt.

5. Verfahren nach Anspruch 3, **dadurch gekennzeichnet, dass** die Reihenfolge der Nachrichten des die SSL-Sitzung einleitenden Handshakes, nachdem der Client eine mit dem IP Multicast-Kennzeichen versehene CertificateRequest-Nachricht vom Server empfangen hat, in der Weise verändert wird, dass die Generierung des MasterKey durch den Client unterbleibt, der Client sein Certificate ohne unmittelbar anschließendes Senden einer ChangeCipherSpec-Nachricht und Umschalten auf verschlüsselte Übertragung an den Server überträgt und der Server hierauf einen von ihm generierten und mit dem öffentlichen Schlüssel des Clients verschlüsselten MasterKey mit einer ServerMasterKeyExchange-Nachricht an den Client übermittelt, wobei nach der Übermittlung der ServerMasterKeyExchange-Nachricht zunächst der Server nach Ausgabe von ChangeCipherSpec und Finished in den Modus für eine verschlüsselte Datenübertragung schaltet und der Client die vom Server erhaltene ServerMasterKeyExchange-Nachricht daran anschließend durch Ausgabe von ChangeCipherSpec und Finished sowie Umschalten in den Modus für die verschlüsselte Übertragung von Daten quittiert.

6. Verfahren nach Anspruch 3 oder 4, **dadurch gekennzeichnet, dass** der Ablauf des Handshakes bis zur ChangeCipherSpec-Nachricht des Servers dem Handshake nach dem Standard-SSL-Protokoll folgt, der Server aber dann anstelle der Finished-Nachricht eine modifizierte ServerMasterKeyExchange-Nachricht ausgibt, welche zumindest einen von ihm generierten verschlüsselten MasterKey enthält und von einer weiteren ChangeCipherSpec-Nachricht des Servers gefolgt wird, wobei der Client als Quittung für den Empfang des MasterKey und der nachfolgenden ChangeCipherSpec-Nachricht des Servers seinerseits erneut eine ChangeCipherSpec-Nachricht und eine Finished-Nachrticht ausgibt und danach in einen Verschlüsselungsmodus umschaltet, bei dem der neue vom Server bereitgestellte MasterKey verwendet wird.

7. Verfahren nach Anspruch 6, **dadurch gekennzeichnet, dass** der modifizierten ServerMasterKeyExchange-Nachricht eine ClientAuthRequest-Nachricht des Servers, mit welcher dieser den Client zur Authentifizierung mit einem Passwort oder einer PIN auffordert, sowie eine diese Aufforderung quittierende ClientAuthResponse-Nachricht des Clients vorausgehen.

8. Verfahren nach einem der Ansprüche 1 bis 7, **dadurch gekennzeichnet, dass** der Server in der Kommunikation mit einem Client innerhalb der ServerHello-Nachricht eine zur Kommunikation mit anderen Clients identische CipherSuite verwendet, wobei für den Fall, dass eine solche CipherSuite nicht ebenfalls in der ClientHello-Nachricht enthalten ist, vom Server eine Fehlermeldung ausgegeben wird.

9. Verfahren nach Anspruch 6 oder 7, **dadurch gekennzeichnet, dass** der Server und der Client nach der Ausgabe der jeweils zweiten ChangeCipherSpec-Nachricht zur Verschlüsselung die gleiche CipherSuite verwenden, auf die sie sich bei der Einleitung des Handshake mit der ClientHello-Nachrticht und der ServerHello-Nachricht verständigt haben.

## Claims

1. Method for agreeing on keys for a cryptographically secured point-to-multipoint connection between a server as data source and multiple clients as data sinks in the Internet, **characterized in that** the key agreement takes place according to a modified SSL or TLS protocol wherein, as a function of an identifier contained in a server message and identifying the connection to be established as an IP multicast connection, the sequence of messages of the handshake initiating the SSL session is changed and the MasterKey serving to generate the session key or keys for encrypting the application data is generated by the server and transmitted in encrypted form to the client.

2. Method according to claim 1, **characterized in that** the MasterKey is encrypted with the public key of the client.

3. Method according to any one of claims 1 or 2, **characterized in that** the IP multicast identifier used to identify the connection as an IP multicast connection is a part of the ClientCertificateType requested by the server with the CertificateRequest message.

4. Method according to any one of claims 1 or 2, **characterized in that** the IP multicast identifier is part of a modified ServerMasterKeyExchange message with which the server at the same time transmits to the client the MasterKey for later derivation of session keys.

5. Method according to claim 3, **characterized in that**, after the client has received the CertificateRequest message including the IP multicast identifier from the server, the sequence of the messages in the handshake initiating the SSL session is altered in such a way that generation of the MasterKey by the client is omitted, the client transmits its certificate to the server without immediately thereafter sending a ChangeCipherSpec message and switching to encrypted transmission, and the server thereupon transmits to the client, through a ServerMasterKeyExchange message, a MasterKey that it has generated and encrypted with the client's public key, wherein the server, after transmitting the ServerMasterKeyExchange message, first switches to the mode for encrypted data transmission after issuing ChangeCipherSpec and Finished, and the client then acknowledges the ServerMasterKeyExchange message received from the server by issuing ChangeCipherSpec and Finished and switching to the mode for encrypted data transmission.

6. Method according to any one of claims 3 or 4, **characterized in that** the sequence of the handshake follows the standard SSL protocol up to the ChangeCipherSpec message from the server, but the server, instead of issuing the Finished message, then issues a modified ServerMasterKeyExchange message which contains at least one encrypted MasterKey generated by the server and is followed by another ChangeCipherSpec message from the server, and the client in turn issues another ChangeCipherSpec message and a Finished message as acknowledgement of the receipt of the MasterKey and the subsequent ChangeCipherSpec message from the server, and then switches to an encryption mode in which the new MasterKey provided by the server is used.

7. Method according to claim 6, **characterized in that** the modified ServerMasterKeyExchange message is preceded by a ClientAuthRequest message from the server with which the server requests authentication with a password or a PIN from the client, and by a ClientAuthResponse message from the client acknowledging this request.

8. Method according to any one of claims 1 through 7, **characterized in that**, in communication with one client, the server uses a CipherSuite within the ServerHello message that is identical to that used for communication with other clients, wherein the server issues an error message in the event that such a CipherSuite is not also contained in the ClientHello message.

9. Method according to any one of claims 6 or 7, **characterized in that** the server and the client, after issuing the respective second ChangeCipherSpec message, use the same CipherSuite for encryption that they agreed upon during the initiation of the handshake with the ClientHello message and the ServerHello message.

## Revendications

1. Procédé d'échange de clé destiné à une liaison point à multipoint sécurisée par cryptographie entre un serveur agissant comme source de données et plusieurs clients agissant comme collecteurs de données sur Internet, **caractérisé en ce que** l'échange de clé est réalisé selon un protocole SSL et/ou TLS modifié, la séquence des messages du handshake initialisant la session SSL variant en fonction d'un marquage qui définit la liaison à établir comme une liaison de multidiffusion IP et qui est contenu dans un message du serveur, et la clé maîtresse - MasterKey - servant à produire la ou les clés de session pour le cryptage des données d'application, étant générée par le serveur et transmise de façon cryptée au client.

2. Procédé selon la revendication 1, **caractérisé en ce que** la clé maîtresse - MasterKey - est cryptée avec la clé publique du client.

3. Procédé selon la revendication 1 ou 2, **caractérisé en ce que** le marquage de multidiffusion IP servant à définir la liaison comme une liaison de multidiffusion IP fait partie du type de certificat client - ClientCertificateType - demandé par le serveur avec le message de demande de certificat - CertificateRequest.

4. Procédé selon la revendication 1 ou 2, **caractérisé en ce que** le marquage de multidiffusion IP fait partie d'un message modifié d'échange de clé maîtresse du serveur - ServerMasterKeyExchange - avec lequel le serveur communique en même temps la clé maîtresse - MasterKey - au client pour la déduction ultérieure de clés de session.

5. Procédé selon la revendication 3, **caractérisé en ce que**, une fois le client ayant reçu le message de demande de certificat - CertificateRequest - pourvu du marquage de multidiffusion IP envoyé par le serveur, la séquence des messages du handshake initialisant la session SSL est modifiée de manière à ce que la clé maîtresse ne soit pas générée par le client, que le client transmette son certificat au serveur sans envoyer juste après de message de spécification de changement de chiffrement - ChangeCipherSpec - et sans passer à une transmission cryptée et que le serveur transmette alors au client une clé maîtresse - MasterKey -qu'il a générée et cryptée avec la clé publique du client avec un message d'échange de clé maîtresse du serveur - ServerMasterKeyExchange -, le serveur, une fois le message d'échange de clé maîtresse du serveur - ServerMasterKeyExchange - transmis, commençant par passer en mode de transmission cryptée des données après avoir délivré la spécification de changement de chiffrement - ChangeCipherSpec - et le message de fin - Finished, et le client accusant ensuite la réception du message d'échange de clé maîtresse du serveur - ServerMasterKeyExchange - obtenu du serveur en délivrant une spécification de changement de chiffrement - ChangeCipherSpec - et un message de fin - Finished - et en passant en mode de transmission cryptée des données.

6. Procédé selon la revendication 3 ou 4, **caractérisé en ce que** le déroulement du handshake suit le handshake selon le protocole SSL standard jusqu'au message de spécification de changement de chiffrement - ChangeCipherSpec - du serveur mais que le serveur délivre ensuite, à la place du message de fin - Finished -, un message modifié d'échange de clé maîtresse du serveur-ServerMasterKeyExchange - qui contient au moins une clé maîtresse - MasterKey - cryptée qu'il a générée, ledit message étant suivi d'un autre message de spécification de changement de chiffrement - ChangeCipherSpec - du serveur, le client délivrant de nouveau un message de spécification de changement de chiffrement - ChangeCipherSpec - et un message de fin - Finished - pour accuser réception de la clé maîtresse - MasterKey - et du message subséquent de spécification de changement de chiffrement - ChangeCipherSpec - reçus du serveur, et passant ensuite dans un mode crypté utilisant la nouvelle clé maîtresse - MasterKey - mise à disposition par le serveur.

7. Procédé selon la revendication 6, **caractérisé en ce qu'**un message de demande d'authentification du client - ClientAuthRequest - envoyé par le serveur pour demander au client de s'identifier avec un mot de passe ou un code PIN et un message de réponse d'authentification du client - ClientAuthResponse - envoyé par le client pour accuser cette demande précèdent le message modifié d'échange de clé maîtresse du serveur - ServerMasterKeyExchange.

8. Procédé selon l'une quelconque des revendications 1 à 7, **caractérisé en ce que**, pour communiquer avec un client, le serveur utilise, dans le message ServerHello, une suite de chiffrement - CipherSuite - identique à celle utilisée pour communiquer avec d'autres clients, un message d'erreur étant délivré par le serveur lorsqu'une telle suite de chiffrement - CipherSuite - n'est pas également contenue dans le message ClientHello.

9. Procédé selon la revendication 6 ou 7, **caractérisé en ce que**, une fois que le deuxième message de spécification de changement de chiffrement - ChangeCipherSpec - respectif a été délivré, le serveur et le client utilisent pour le cryptage la même suite de chiffrement que celle négociée lors du handshake avec le message ClientHello et le message ServerHello.
